# EUROPÄISCHE PATENTSCHRIFT

(11) **EP 2 678 598 B1**
(45) Veröffentlichungstag und Bekanntmachung des Hinweises auf die Patenterteilung: **20.04.2016**
(21) Anmeldenummer: 12705791.7
(22) Anmeldetag: 17.02.2012
(51) Int. Cl.: F16L 33/035, F16L 33/02, F16L 33/03

(54) **SPANNEINRICHTUNG, INSBESONDERE FÜR SCHLÄUCHE**
CLAMPING DEVICE, IN PARTICULAR FOR HOSES
DISPOSITIF DE SERRAGE, NOTAMMENT POUR FLEXIBLES

(30) Priorität: 21.02.2011 DE 102011012421
(43) Veröffentlichungstag der Anmeldung: 01.01.2014
(73) Patentinhaber: Sassnowski, Helmut, 72160 Horb-Altheim (DE); Rerucha, Raimund, 70499 Stuttgart (DE)
(72) Erfinder: SASSNOWSKI, Helmut, 72160 Horb-Altheim (DE)
(74) Vertreter: Jackisch-Kohl, Anna-Katharina
(86) Internationale Anmeldenummer: PCT/EP2012/000691
(87) Internationale Veröffentlichungsnummer: WO 2012/113524

(56) Entgegenhaltungen:
- WO-A1-03/008815
- WO-A1-2005/047727
- GB-A- 400 139
- GB-A- 2 098 267
- US-A- 2 546 098
- US-B1- 6 898 825

## Beschreibung

Die Erfindung betrifft eine Spanneinrichtung, insbesondere für Schläuche, nach dem Oberbegriff des Anspruches 1.

Es sind Spanneinrichtungen in Form von Spannschellen bekannt, mit denen Schläuche auf Rohren befestigt werden. Das Spannband wird mit Hilfe einer Spannschraube zusammengezogen (siehe z.B. das Dokument GB400139A), um den Schlauch auf dem Rohr zu befestigen. Zum Betätigen der Spannschraube ist ein Werkzeug erforderlich, was die Handhabung der Spanneinrichtung erschwert.

Der Erfindung liegt die Aufgabe zugrunde, die gattungsgemäße Spanneinrichtung so auszubilden, dass mit ihr in einfacher Weise und ohne Zuhilfenahme eines Werkzeuges das Spannelement aus einer Ausgangs- in eine Spannlage verstellt werden kann.

Diese Aufgabe wird bei der gattungsgemäßen Spanneinrichtung erfindungsgemäß mit den kennzeichnenden Merkmalen des Anspruches 1 gelöst.

Bei der erfindungsgemäßen Spanneinrichtung begrenzt das Spannelement im Gehäuse den Druckraum, in dem das Druckmedium untergebracht ist. Durch Betätigen des Auslöseelementes beaufschlagt das Druckmedium das Spannelement und verstellt es aus der Ausgangslage in die Spannlage. Für die Auslösung des Spannelementes ist kein Werkzeug erforderlich, so dass die Spanneinrichtung einfach und problemlos gehandhabt werden kann. Das Auslöseelement ist Bestandteil der Spanneinrichtung und steht damit jederzeit zur Verfügung, wenn der Spannvorgang eingeleitet werden soll.

Das Spannelement ist ein Kolben, der verschiebbar im Gehäuse gelagert ist.

Bevorzugt ist das Spannelement so ausgebildet, dass es nur in Druckbeaufschlagungsrichtung verstellt werden kann. Dadurch wird sichergestellt, dass die vom Spannelement erzeugte Kraft stets aufrecht erhalten bleibt und nicht durch Zurückbewegen verringert wird.

Bei einer vorteilhaften Ausbildung erfolgt die Sicherung des Spannelementes gegen Zurückschieben entgegen Druckbeaufschlagungsrichtung durch wenigstens ein Sperrelement.

Dieses Sperrelement ist vorteilhaft eine Sperrklinke, die unter Federkraft in eine Verzahnung eingreift, die am Spannelement vorgesehen ist. Die Sperrklinke wird unter der Federkraft stets in Eingriff mit der Verzahnung gehalten, so dass zuverlässig eine Bewegung des Spannelementes entgegen Druckbeaufschlagungsrichtung verhindert wird. Die Sperrklinke ist darüber hinaus ein einfaches und kostengünstiges Bauteil, das sich auch leicht am Gehäuse der Spanneinrichtung anbringen lässt.

Das Spannelement ist mit wenigstens einem Anschluss für ein Ende eines Spannringes versehen. Der Anschluss kann durch einen Lagerbolzen gebildet sein, auf dem das Ende des Spannringes angeordnet ist. Der Spannring kann zum Festspannen eines Schlauches auf einem Anschlussstück, wie einem Rohr, herangezogen werden.

Das andere Ende des Spannringes ist mit wenigstens einem gehäuseseitigen Anschluss verbunden, der beispielsweise durch einen Lagerbolzen gebildet sein kann.

Wird das Spannelement durch das Druckmedium verschoben, dann wird der kolbenseitige Anschluss gegenüber dem gehäuseseitigen Anschluss so verstellt, dass der Spannring elastisch zusammengezogen wird und eine Spannkraft auf dem von ihm umgebenen Schlauch ausübt.

Vorteilhaft ist das auf dem kolbenseitigen Anschluss und/oder auf dem gehäuseseitigen Anschluss befindliche Ende des Spannringes als Dehnausgleichsabschnitt ausgebildet. Durch den Dehnausgleichsabschnitt können Durchmesservergrößerungen des Schlauches, wie sie beispielsweise beim Erwärmen des Schlauches auftreten, durch elastische Verformung aufgefangen werden. Die Erwärmung des Schlauches tritt beispielsweise dann auf, wenn durch ihn ein Medium mit höherer Temperatur strömt, wie es beispielsweise bei Kühlwasserschläuchen in Verbrennungsmotoren von Kraftfahrzeugen der Fall ist. Da der Spannring infolge des Dehnausgleichsabschnittes die Durchmesservergrößerungen des Schlauches durch elastische Verformung mitmachen kann, wird eine Beschädigung des Schlauches vermieden. Kühlt der Schlauch wieder ab und verringert sich dessen Durchmesser, dann kehrt auch der Dehnausgleichsabschnitt in seine Ausgangsform zurück.

Sind beide Enden des Spannringes als, Dehnausgleichsabschnitte ausgebildet, können auch größere Durchmessererweiterungen des Schlauches zuverlässig durch entsprechende elastische Verformung aufgefangen werden.

Die Enden des Spannringes sind vorteilhaft ringförmig und elastisch aufweitbar ausgebildet. Mit den ringförmigen Enden lässt sich der Spannring einfach auf dem gehäuseseitigen und dem kolbenseitigen Anschluss montieren. Die Herstellung der Ringenden ist in einfacher Weise möglich. Das Spannelement liegt quer zu den Ringenden und auch quer zur Spannringachse.

Im Druckraum ist wenigstens ein Behältnis untergebracht, das mit dem Auslöseelement zum Freisetzen des Druckmediums geöffnet wird.

Damit das im Druckraum befindliche Behältnis einfach geöffnet werden kann, ist das Auslöseelement mit wenigstens einem Öffnungselement versehen.

Bei einer bevorzugten Ausbildung hat das Öffnungselement wenigstens einen, vorzugsweise jedoch mehrere spitz zulaufende Zähne. Mit ihnen lässt sich das Behältnis zuverlässig durchstoßen und damit der Inhalt des Behältnisses freisetzen.

Vorteilhaft sind im Behältnis, vorzugsweise in mehreren Behältnissen, flüssige Ausgangsstoffe enthalten, die nach dem Öffnen des Behältnisses chemisch miteinander reagieren und einen Schaum bilden, der das Druckmedium bildet, das auf das Spannelement wirkt. Die zur Erzeugung des Schaumes erforderlichen Ausgangsstoffe können in unterschiedlichen Kammern eines einzigen Behältnisses, aber auch jeweils in eigenen Behältnissen untergebracht sein.

Damit das Auslöseelement einfach betätigt werden kann, ist es mit einem außerhalb des Gehäuses liegenden Griffstück versehen. Es ist über wenigstens einen Verbindungsteil mit dem Öffnungselement im Druckraum verbunden. Durch Ziehen am Griffstück lässt sich das Öffnungselement gegen das Behältnis ziehen und es dadurch öffnen.

Damit das Griffstück mit dem Verbindungsteil nach dem Spannvorgang nicht am Gehäuse verbleibt, ist es mit wenigstens einer Schneidkante versehen. Mit ihr lässt sich der Verbindungsteil nach dem Öffnen des Behältnisses durchtrennen.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in perspektivischer Darstellung eine erfindungsgemäße Spanneinrichtung,
- Fig. 2: in Seitenansicht die Spanneinrichtung gemäß Fig. 1,
- Fig. 3: eine Draufsicht auf die Spanneinrichtung gemäß Fig. 2,
- Fig. 4: in Seitenansicht die Spanneinrichtung gemäß Fig. 1 im Betriebszustand ohne Spannringe,
- Fig. 5: die Spanneinrichtung gemäß Fig. 4. mit Spannringen,
- Fig. 6: in vergrößerter Darstellung die Spanneinrichtung gemäß Fig. 1 im Betriebszustand mit geöffnetem Gehäuse, jedoch ohne Spannringe,
- Fig. 7: in perspektivischer Darstellung den einen Gehäuseteil des Gehäuses gemäß Fig. 6,
- Fig. 8: den anderen Gehäuseteil des Gehäuses gemäß Fig. 6 in perspektivischer Darstellung,
- Fig. 9: in perspektivischer Darstellung zwei Spannringe der Spanneinrichtung,
- Fig. 10: in perspektivischer Darstellung den einen Teil eines Kolbens der Spanneinrichtung gemäß Fig. 1,
- Fig. 11: in perspektivischer Darstellung den anderen Teil eines Kolbens der Spanneinrichtung gemäß Fig. 1,
- Fig. 12: in perspektivischer Darstellung eine Druckfeder der Spanneinrichtung gemäß Fig. 1,
- Fig. 13: in perspektivischer Darstellung eine Rastklinke der Spanneinrichtung gemäß Fig. 1,
- Fig. 14: in perspektivischer Darstellung ein Auslöseelement der Spanneinrichtung gemäß Fig. 1,
- Fig. 15: in vereinfachter Darstellung eine Ausführungsform der nich zur Erfindung gehört einer als Druckzylinder ausgebildeten Spanneinrichtung in unterschiedlichen Stellungen,
- Fig. 16: in vereinfachter Darstellung eine Ausführungsform der nich zur Erfindung gehört einer als Zugzylinder ausgebildeten Spanneinrichtung in verschiedenen Stellungen,
- Fig. 17: in vereinfachter Darstellung eine Ausführungsform der nich zur Erfindung gehört einer als Spreizdübel ausgebildeten Spanneinrichtung im Ausgangszustand,
- Fig. 18: die Spanneinrichtung gemäß Fig. 17 im Betriebszustand,
- Fig. 19: in Explosivdarstellung ein Ausführungsbeispiel der Verbindung zweier rechtwinklig zueinander liegender Rahmen mit Hilfe einer nicht erfindungsgemäßen Spanneinrichtung,
- Fig. 20: in perspektivischer Darstellung die Anordnung gemäß Fig. 19.

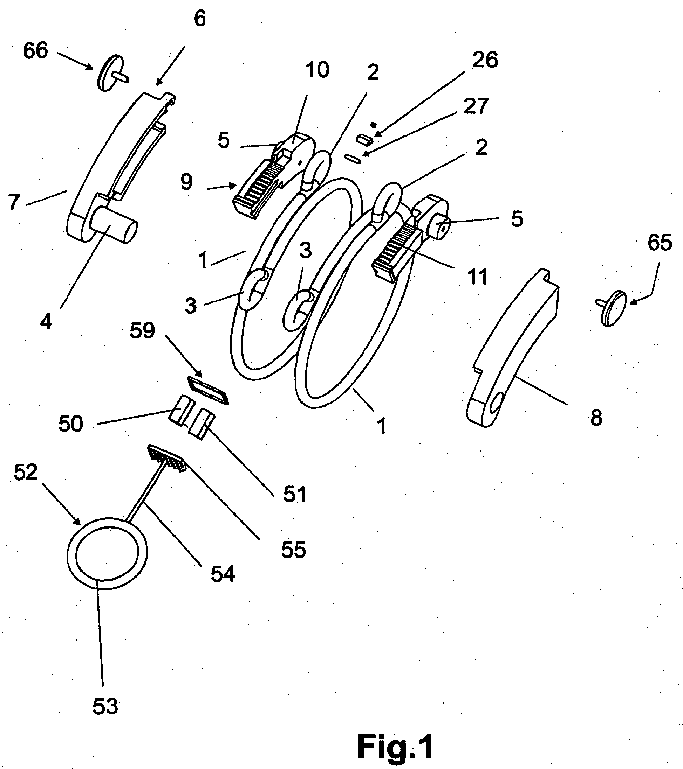

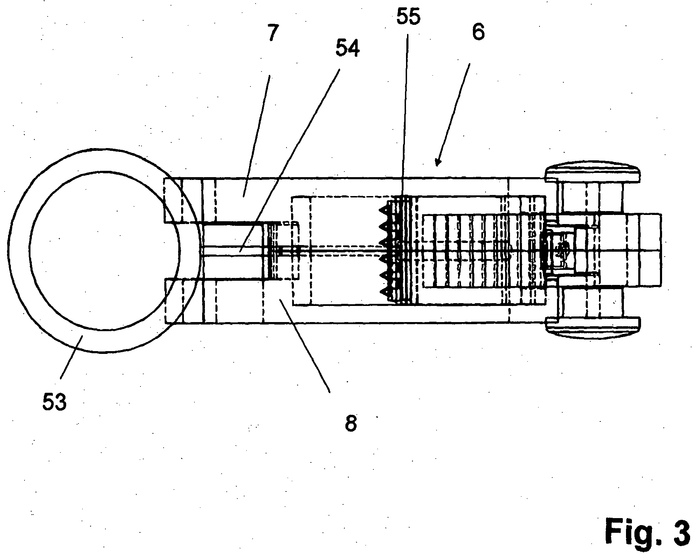

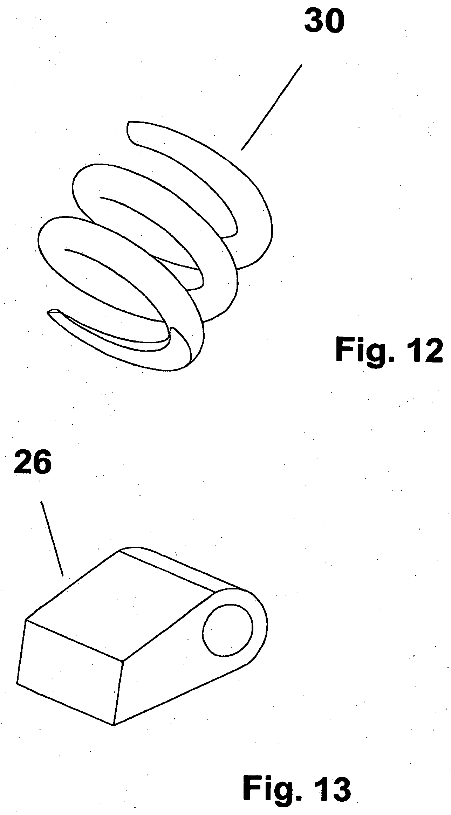

Die Spanneinrichtung gemäß den Fig. 1 bis 14 dient dazu, Schläuche auf Anschlussstutzen durch Klemmkraft zu befestigen. Hierzu dient wenigstens ein Spannring 1. Vorteilhaft hat die Spanneinrichtung zwei Spannringe 1, die spiegelbildlich zueinander ausgebildet und angeordnet sind. Die Enden der Spannringe 1 sind zu Ringen 2, 3 geformt, die auf Lagerbolzen 4, 5 sitzen. Der Lagerbolzen 4 ist ortsfest an einem Gehäuse 6 vorgesehen, während der Lagerbolzen 5 zum Zusammenziehen der Spannringe 1 gegenüber dem Gehäuse 6 verschiebbar ist. Das Gehäuse 6 besteht aus zwei Gehäuseteilen 7, 8, die vorteilhaft unlösbar, beispielsweise durch Schweißen, miteinander verbunden werden und vorteilhaft aus Kunststoff bestehen.

Der Lagerbolzen 4 ist einstückig mit dem Gehäuseteil 7 ausgebildet. Der Lagerbolzen 5 ist an einem Kolben 9 vorgesehen, vorzugsweise einstückig mit ihm ausgebildet. Der Kolben 9 besteht aus zwei Kolbenteilen 10, 11 die spiegelbildlich zueinander ausgebildet und fest miteinander verbunden sind. Durch Verschieben des Kolbens 9 relativ zum Gehäuse 6 werden die Spannringe 1 elastisch zusammengezogen und auf diese Weise der (nicht dargestellte), von den Spannringen 1 umschlossene Schlauch auf dem Anschlussstück, beispielsweise einem Rohr, festgeklemmt.

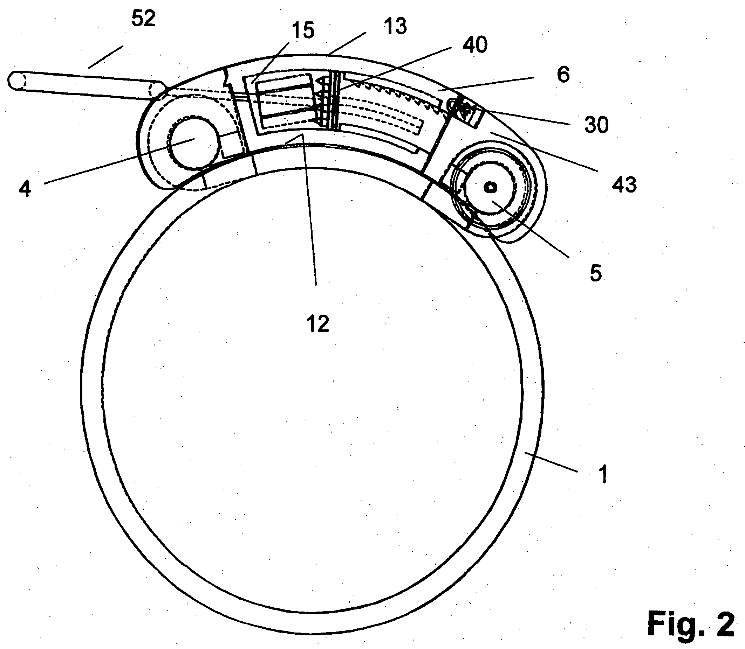

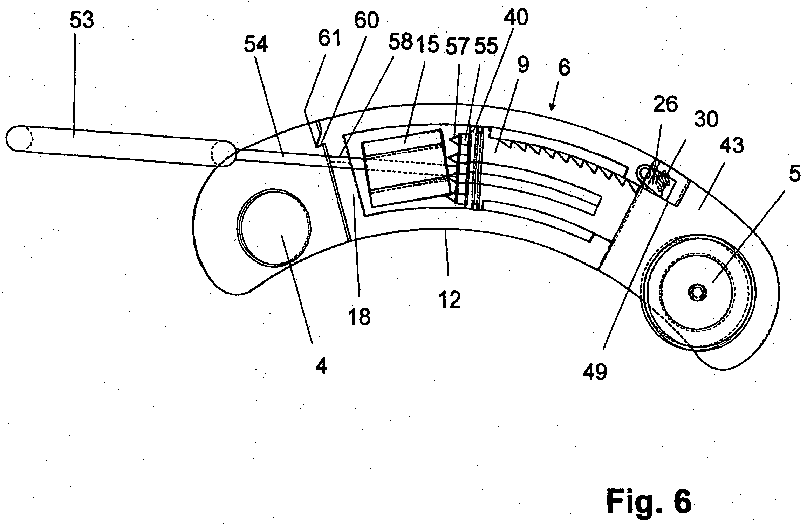

Das Gehäuse 6 ist vorteilhaft so ausgebildet, dass es mit seiner den Spannringen 1 zugewandten Unterseite derart gekrümmt verläuft, dass es etwa gleichen Krümmungsradius wie die Spannringe 1 aufweist (Fig. 2). Die Gehäuseunterseite 12 (Fig. 6) verläuft stetig gekrümmt und geht bogenförmig in eine Oberseite 13 des Gehäuses 6 über, die vorteilhaft parallel zur Gehäuseunterseite 12 verläuft.

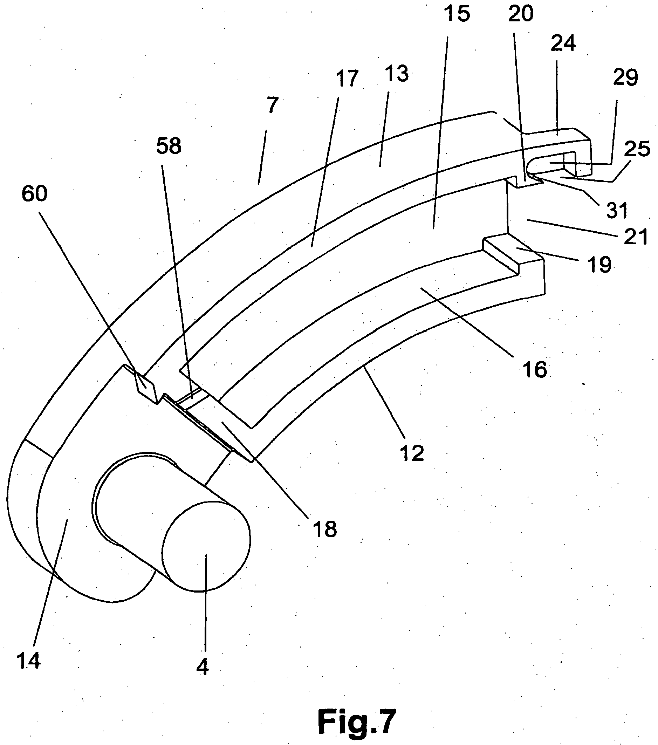

Der Gehäuseteil 7 hat eine Seitenwand 14 (Fig. 7), die über einen Kolbenraum 15 übersteht. Er ist durch einen Boden 16, eine Decke 17 und eine Stirnwand 18 begrenzt. Über die Stirnwand 18 ragt die Seitenwand 14 vor und ist in diesem Bereich mit dem quer abstehenden Lagerbolzen 4 versehen. Die Decke 17 des Gehäuseteiles 7 bildet mit ihrer Außenseite einen Teil der Gehäuseoberseite 13, während die Unterseite des Bodens 16 einen Teil der Gehäuseunterseite 12 bildet.

Der Kolbenraum 15 ist an dem der Stirnwand 18 gegenüberliegenden Ende offen. Von der Unterseite der Decke 17 sowie der Oberseite des Bodens 16 steht jeweils ein kurzer Steg 19, 20 vor, die mit Abstand einander gegenüberliegen und eine Durchführöffnung 21 für den Kolben 9 begrenzen.

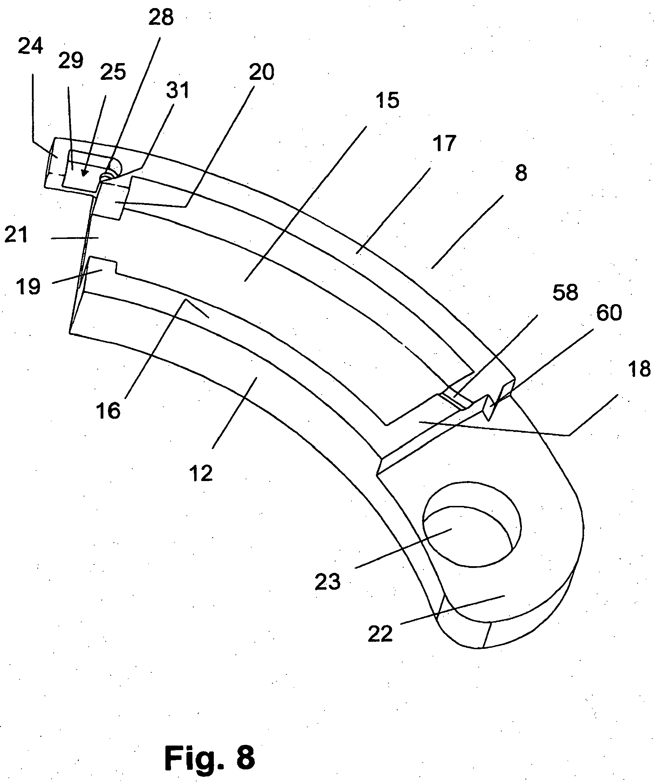

Der Gehäuseteil 8 (Fig. 8) hat ebenfalls den Kolbenraum 15, der durch den Boden 16, die Decke 17 und die Stirnwand 18 begrenzt ist. Eine Seitenwand 22 des Gehäuseteiles 8 ragt über die Stirnwand 18 und ist in diesem Bereich mit einer Öffnung 23 versehen, in die der Lagerbolzen 4 ragt. Der Boden 16 und die Decke 17 sind an ihrem der Stirnwand 18 gegenüberliegenden Ende mit einem flachen Steg 19, 20 versehen. Die beiden Stege begrenzen die Durchführöffnung 21 für den Kolben 9.

Wenn die beiden Gehäuseteile 7, 8 miteinander verbunden sind, begrenzen sie gemeinsam den Kolbenraum 15.

Die beiden Gehäuseteil 7, 8 haben im Bereich der Durchführöffnung 21 jeweils einen über die Decke 17 vorstehenden Ansatz 24, in dem ein Einbauraum 25 für eine Sperrklinke 26 (Fig. 1) vorgesehen ist. Der Einbauraum 25 ist zur Gehäuseunterseite 12 hin offen. Die Sperrklinke 26 sitzt auf einem Lagerstift 27, der mit seinen Enden in Vertiefungen 28 in den Seitenwänden 29 des Einbauraumes 25 gelagert ist. Die Sperrklinke 26 kann unter der Kraft wenigstens einer Druckfeder 30 an einer Schrägfläche 31 anliegen, die den Einbauraum 25 an einer Seite begrenzt (Fig. 7 und 8). Die Schrägfläche 31 ist an der Außenseite der Stege 20 der Gehäuseteile 7, 8 vorgesehen.

Die Druckfeder 30 ist vorteilhaft eine Schraubendruckfeder, die in geeigneter Weise im Einbauraum 25 gelagert ist. Die Druckfeder 30 steht unter Vorspannung, so dass die Sperrklinke 26 zuverlässig kraftbeaufschlagt ist.

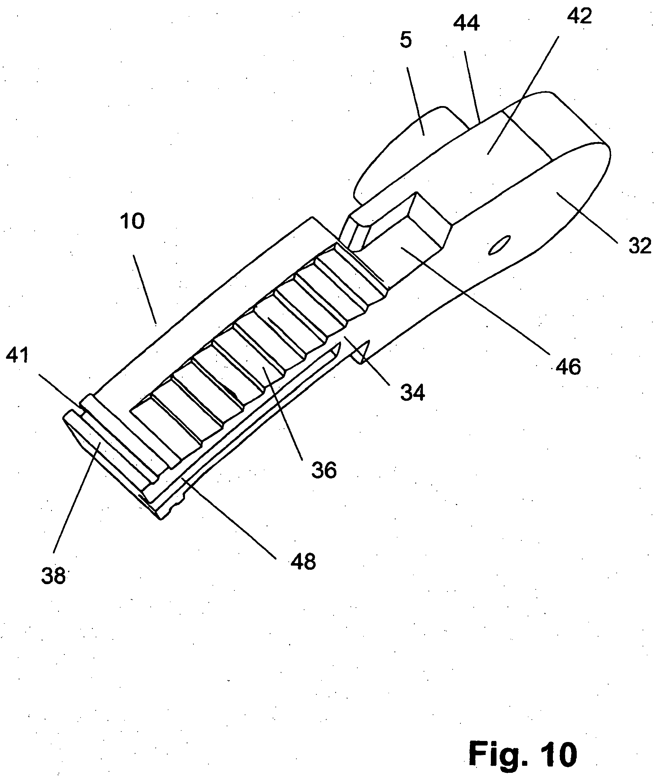

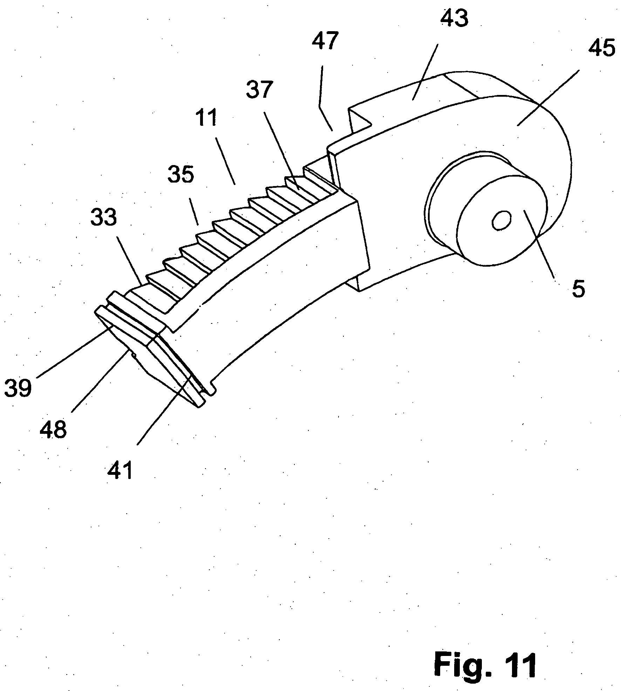

Der Kolben 9 ist wie das Gehäuse 6 zweiteilig ausgebildet und wird durch die beiden Kolbenteile 10, 11 gebildet, die anhand der Fig. 10 und 11 näher beschrieben werden. Die beiden Kolbenteile 10, 11 werden mit ihren einander zugewandten Innenseiten 32, 33 aneinanderliegend miteinander verbunden. Beide-Kolbenteile 10, 11 haben einen Sperrteil 34, 35, der an seiner Oberseite mit Klinkenzähnen 36, 37 versehen ist. Mit ihnen wirkt die Sperrklinke 26 derart zusammen, dass der Kolben 9 nur in einer Richtung bewegt werden kann, in der Gegenrichtung durch die Sperrklinke 6 jedoch gesperrt wird.

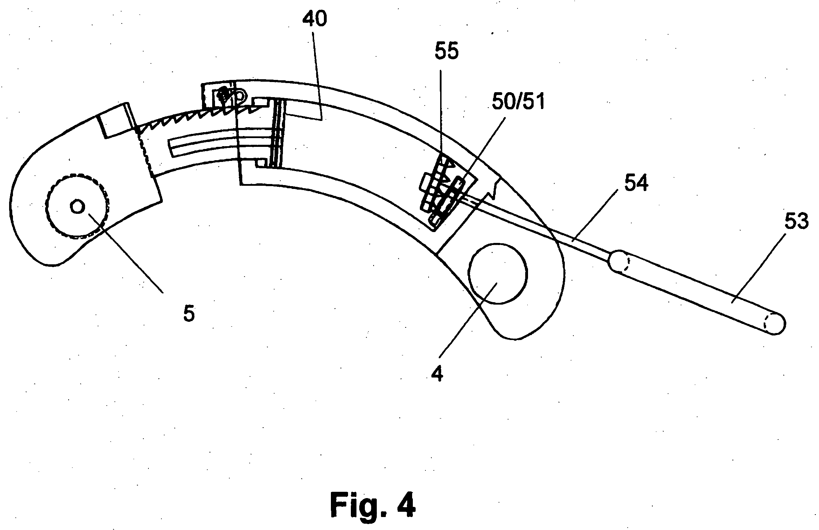

Die Sperrteile 34, 35 ragen durch die Durchführungsöffnung 21 in den Kolbenraum 15 des Gehäuses 6. Am freien Ende sind die Sperrteile 34, 35 mit einem Kolbenendteil 38, 39 versehen. Die Stirnseiten der Kolbenendteile 38, 39 bilden die Kolbenfläche 40 (Fig. 2 und 4), die mit einem Druckedium beim Spannvorgang beaufschlagt wird. Die Kolbenendteile 38, 39 sind umfangsseitig mit einer Nut 41 versehen, die einen Dichtring aufnimmt, mit dem der Kolben 9 gegen die Wandung des Kolbenraums 15 abgedichtet wird.

Die Sperrteile 34, 35 sind über ihre Länge gekrümmt ausgebildet und schließen an einen Lagerteil 42, 43 an, der außerhalb des Kolbenraums 15 liegt. Von den voneinander abgewandten Außenseiten 44, 45 der Lagerteile 42, 43 steht jeweils ein Lagerbolzen 5 quer ab, auf dem ein Ende der Spannringe 1 sitzt. Die Lagerteile 42, 43 stehen über die Klinkenzähne 36, 37 sowie die gegenüberliegende Seite der Sperrteile 34, 35 vor. Mit diesem überstehenden Teil liegen die Lagerteile 42, 43 in der Ausgangslage gemäß Fig. 2 an den Stegen 19 der Gehäuseteile 7, 8 an. Die Lagerteile 42, 43 bilden in der Ausgangslage im Wesentlichen eine stetige Fortsetzung des Gehäuses.

Die Lagerteile 42, 43 sind an ihrer Oberseite jeweils mit einer Vertiefung 46, 47 versehen, in die der Ansatz 24 des Gehäuses 6 in der Ausgangslage ragt.

Der Kolben 9 ist mittig mit einer in seiner Längsrichtung sich erstreckenden sacklochartigen Vertiefung 48 versehen, die in die stirnseitige Kolbenfläche mündet.

Wie Fig. 6 zeigt, befindet sich in der Ausgangslage der Spanneinrichtung der Kolben 9 vollständig innerhalb des Kolbenraums 15 des Gehäuses 6. Die Sperrklinke 26 liegt unter der Kraft der Druckfeder 30 mit ihrem Ende auf dem Boden 49 der Vertiefung 46, 47 der Lagerteile 42, 43 auf.

Der Kolbenraum 15 ist länger als der Kolben 9. Zwischen der Stirnwand 18 des Gehäuses 6 und dem freien Ende des Kolbens 9 verbleibt somit ein Freiraum, in dem ein Druckmedium untergebracht werden kann, mit dem der Kolben 9 zum Spannen der Spannringe 1 verschoben werden kann. Das Druckmedium wird durch die chemische Reaktion von flüssigen, reaktionsfähigen Ausgangsstoffen unter Erzeugung eines Schaums gebildet. Werden Polyole mit Polyisocyanaten und einem Treibmittel, in der Regel Wasser, sowie gegebenenfalls einem Katalysator vermischt, so reagiert das Polyol mit dem Polyisocyanat in einer Polyaddition zu Polyurethanschaum. Das Treibmittel bildet Gaseinschlüsse. Wird als Treibmittel Wasser eingesetzt, reagiert es mit einem Teil des Polyisocyanates und setzt dabei Kohlendioxid frei. Das dabei mit entstehende Amin kann gegebenenfalls mit verbleibendem Isocyanat zu einem Harnstoffderivat weiterreagieren und so zur Stabilität des Netzwertes beitragen. Das Treibmittel wird in der Regel dem Polyol beigemengt. In diesem Falle werden zur Erzeugung des Polyurethanschaumes zwei Phasen eingesetzt, die in jeweils einem Behälter 50, 51 (Fig. 1) untergebracht sind. Es ist auch möglich, nur ein einziges Behältnis einzusetzen, das zwei Kammern für diese beiden Phasen enthält.

Je nach Auswahl der verwendeten Ausgangsstoffe können die Eigenschaften des Polyurethanschaums eingestellt werden. Werden langkettige Polyole eingesetzt, bilden sich weiche bis elastische Schäume, während bei Verwendung kurzkettiger Polyole stark vernetzte harte Schaumstoffe entstehen.

Werden die beiden Komponenten miteinander gemischt, dann beaufschlagt der entstehende Polyurethanschaum die Kolbenfläche 40 und verschiebt den Kolben 9.

Die in den Behältnissen 50, 51 befindlichen Komponenten sind so aufeinander abgestimmt, dass der bei der Reaktion der Komponenten gebildete Schaum eine solche Kraft auf den Kolben 9 ausübt, dass die Spannringe 1 in ausreichendem Maße so stark zusammengezogen werden, dass der Schlauch auf dem Anschlussstück sicher verklemmt wird.

Wird der Kolben 9 aus dem Gehäuse 6 herausgeschoben, dann ratscht die Sperrklinke 26 über die Klinkenzähne 36, 37. Die Druckfeder 30 sorgt dafür, dass die Sperrklinke 26 stets in Eingriff mit den Klinkenzähnen 36, 37 ist. Die Klinkenzähne 36, 37 in Verbindung mit der Sperrklinke 26 verhindern, dass der Kolben 9 zurückgeschoben wird. Dadurch ist sichergestellt, dass der Kolben 9 in jeder Lage einwandfrei gegen Zurückschieben gesichert und damit gewährleistet ist, dass die Spannringe 1 den Schlauch zuverlässig auf dem Anschlussstück festspannen.

Da der Kolben 9 durch die Sperrklinke 26 in seiner jeweiligen Ausziehlage gehalten wird, muss das durch die chemische Reaktion entstehende Druckmedium nur zum Herausschieben des Kolbens 9 wirksam sein. Dieses Druckmedium kann darum beispielsweise auch ein Gas sein, das auf die Kolbenfläche 40 einen ausreichenden Druck ausübt.

Der entstehende Schaum kann im Kolbenraum 15 auch aushärten, da die Spanneinrichtung so ausgebildet ist, dass der Kolben 9 nicht mehr zurückgefahren werden kann, sondern durch die Sperrklinke 26 in der jeweils ausgezogenen Lage gesperrt wird.

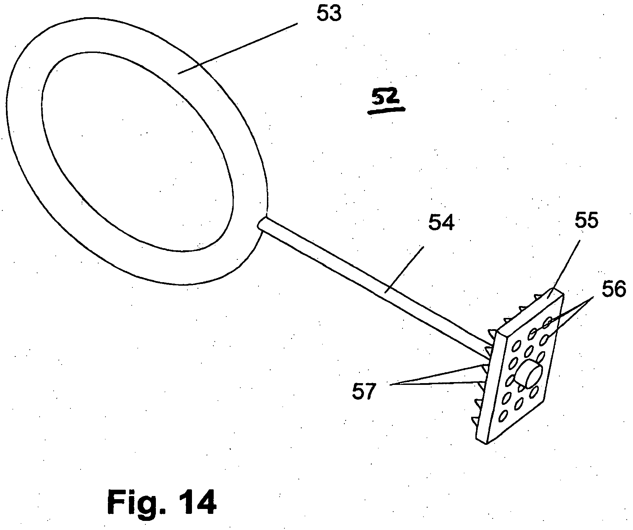

Damit die Komponenten in den Behältnissen 50, 51 freigesetzt werden können, ist die Spanneinrichtung mit einem Auslöseelement 52 versehen. Es hat ein außerhalb des Gehäuses 6 liegendes Griffstück 53. Es ist im Ausführungsbeispiel als Ring ausgebildet, kann selbstverständlich auch jede andere geeignete Form haben. Das Griffstück 53 ist durch ein dünnes Verbindungsteil 54 mit einem plattenförmigen Öffnungselement 55 verbunden (Fig. 14). Es ist von wenigstens einer, vorzugsweise von mehreren Öffnungen 56 durchsetzt und an seiner dem Griffstück 53 zugewandten Seite mit vorstehenden spitzen Zähnen 57 ausgestattet. Das über das Öffnungselement 55 vorstehende Ende des Verbindungsteiles 54 sitzt mit Klemmung in der Vertiefung 48 des Kolbens 9.

Der Verbindungsteil 54 ragt durch eine Öffnung 58 in der Stirnwand 18 des Gehäuses 6. Die Öffnung 58 in der Stirnwand 18 hat einen solch geringen Durchmesser, dass eine Abdichtung gegenüber dem Kolbenraum 15 nicht erforderlich ist.

Der Umriss des Öffnungselementes 55 entspricht dem Innenquerschnitt des Kolbenraums 15. Vorteilhaft sitzt auf dem Öffnungselement 55 eine rechteckige Ringdichtung 59 (Fig. 1), mit der das Öffnungselement 55 dichtend an der Innenwand des Kolbenraumes 15 anliegt.

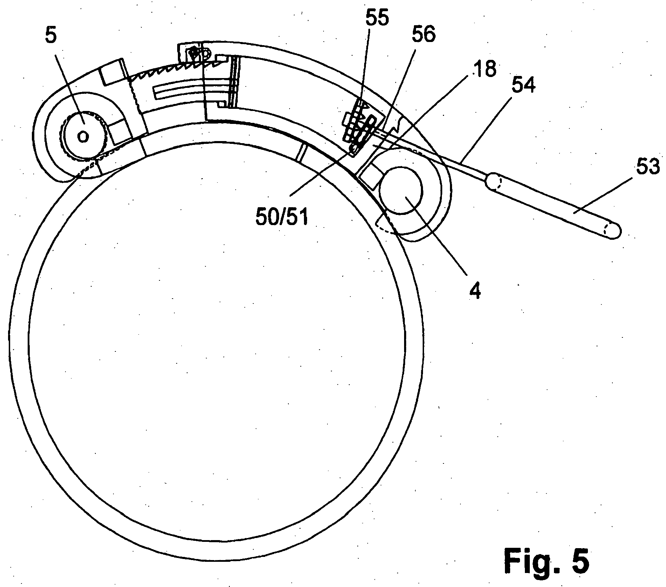

Das Öffnungselement 55 liegt im Bereich zwischen der stirnseitigen Kolbenfläche 40 des Kolbens 9 und den Behältnissen 50, 51 (Fig. 2 und 6). Wenn der Schlauch auf dem Anschlussstück festgespannt werden soll, wird mit dem Griffstück 53 das Öffnungselement 55 gegen die Behältnisse 50, 51 verschoben. Die Zähne 57 durchstoßen die beispielsweise als Kunststoffbeutel ausgebildeten Behältnisse 50, 51 und setzen damit die in ihnen befindlichen Komponenten frei. Sie strömen durch die Öffnungen 56 des Öffnungselementes 55 und bilden in der beschriebenen Weise das Druckmedium, das auf die Kolbenfläche 40 wirkt und damit den Kolben 9 verschiebt. Das Auslöseelement 52 wird in einem Zuge verschoben. Zum Öffnen der Behältnisse 50, 51 durch die Zähne 57 ist keine hohe Kraft notwendig. Die Behältnisse 50, 51 werden durch das Öffnungselement 55 zwischen der Stirnwand 18 des Gehäuses 6 und dem Strömungselement 55 zusammengedrückt (Fig. 4 und 5), so dass die in den Behältnissen befindlichen Komponenten vollständig herausgedrückt werden. Anschließend kann der Verbindungsteil 54 durch eine Bewegung quer zu seiner Längsrichtung abgetrennt werden. Hierzu ist an der Außenseite der Stirnwand 18 ein vorstehendes, im Querschnitt dreieckförmiges Abrissteil 60 vorgesehen, an dessen Kante 61 der Verbindungsteil 54 durch eine entsprechende Querbewegung durchtrennt werden kann. Da der Verbindungsteil 54 dünn ist, lässt er sich sehr einfach an der Abrisskante 61 durchtrennen. Besteht das Auslöseelement 52 in bevorzugter Ausgestaltung aus Kunststoff, lässt sich der Trennvorgang einfach durchführen.

Die Spannringe 1 sind jeweils so gewendelt, dass sie, in Achsrichtung der Spannringe gesehen, in unverspanntem Zustand einen geschlossenen Ring bilden (Fig. 1). Dadurch umschließen die Spannringe 1 bereits in nicht verformtem Zustand den Schlauch vollständig.

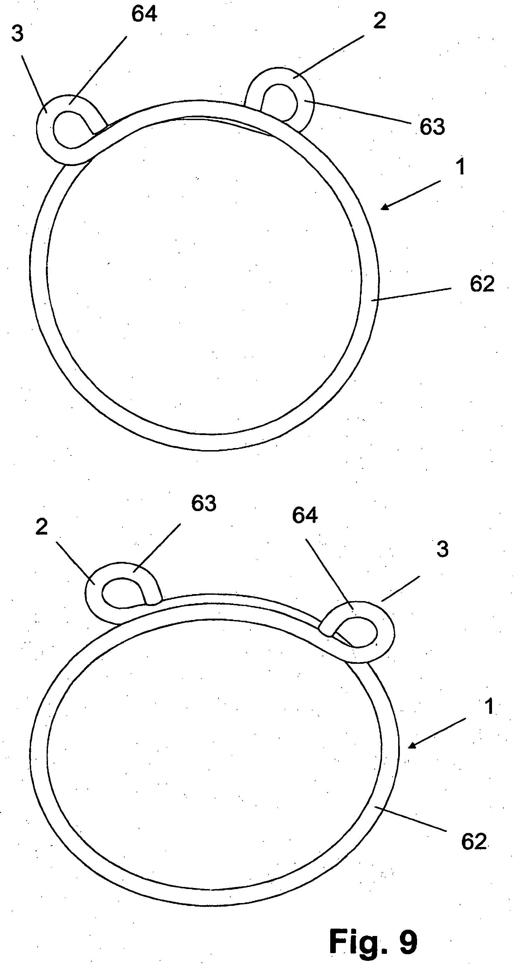

Die freien Enden der Spannringe 1 sind zu den Ringen 2, 3 geformt. Die Spannringe 1 haben einen gewendelten Ringkörper 62 (Fig. 9), der sich über mehr als 360° erstreckt und stetig gekrümmt in die Ringenden 2, 3 übergeht. Aufgrund der Wendelform des Ringkörpers 62 liegen die Ringenden 2, 3, quer zur Ringachse gesehen, unmittelbar nebeneinander (Fig. 1). Die Ringenden 2, 3 werden durch einen Ringabschnitt 63, 64 gebildet, der sich über etwa 180° erstreckt. Die freien Enden der Ringabschnitte 63, 64 liegen mit geringem Abstand dem zugehörigen Bereich des Ringkörpers 62 gegenüber.

Die Ringenden 2, 3 bilden die Ausgleichsabschnitte, die ein Aufweiten des verspannten Schlauches beispielsweise durch Erwärmung erlauben. Die Ringenden 2, 3 können in einem solchen Fall sich elastisch aufweiten und die Durchmesservergrößerung der Spannringe 1 beim Aufweiten des verspannten Schlauches durch elastische Verformung auffangen. Zieht sich der Schlauch wieder zusammen, ziehen sich auch die Ringenden 2, 3 elastisch zusammen.

Die Spannringe 1 bestehen vorteilhaft aus einem Federdraht mit kreisförmigem Querschnitt, um eine Beschädigung des Schlauches zu vermeiden. Der die Spannringe 1 bildende Draht kann aber auch eckigen oder allgemein unrunden Querschnitt haben.

Die Spannringe 1 sitzen mit dem einen Ringende 2, 3 auf dem gehäusefesten Lagerbolzen 4 und mit dem anderen Ringende auf dem kolbenseitigen Lagerbolzen 5. Wird der Kolben 9 in der beschriebenen Weise durch Druckmittelbeaufschlagung verschoben, werden die Spannringe 1 durch elastische Verformung zusammengezogen und somit der Schlauch auf dem Anschlussstück verspannt.

Im Gehäuse 6 sind die Behältnisse 50, 51, der Kolben 9 und das Öffnungselement 55 des Auslöseelementes 53 vor äußeren Einflüssen, wie Verschmutzung, Beschädigung und dergleichen, geschützt untergebracht.

Damit die auf den kolbenseitigen Lagerbolzen 5 sitzenden Ringenden nicht herunterrutschen, sind auf die Lagerbolzen 5 Sicherungsscheiben 65, 66 (Fig. 1) aufgesetzt, die die auf den Lagerbolzen 5 sitzenden Ringenden übergreifen und somit verhindern, dass sie von den Lagerbolzen abrutschen.

Mit der Spanneinrichtung lassen sich die Schläuche auf den Anschlüssen in einfacher Weise zuverlässig festspannen. Da der Kolben 9 durch die Sperrklinke 26 gegen Zurückschieben gesichert ist, gestaltet sich der Spannvorgang sehr einfach. Der Benutzer muss lediglich am Griffstück 53 ziehen, um die chemische Reaktion im Kolbenraum 15 in der beschriebenen Weise auszulösen. Der im Kolbenraum entstehende Schaum schiebt den Kolben 9 selbsttätig aus dem Kolbenraum, so dass die Spannringe 1 gespannt werden. Der Spannvorgang kann auf diese Weise rasch durchgeführt werden, was insbesondere dann von Vorteil ist, wenn eine Vielzahl von Spanneinrichtungen betätigt werden muss.

Die Erzeugung von Druckmedien, beispielsweise vom beschriebenen Schaum, ist bekannt. Die Höhe des im Kolbenraum 15 aufzubringenden Druckes und damit die Menge der in den Behältnissen 50, 51 unterzubringenden Komponenten richtet sich nach der aufzubringenden Spannkraft. Sie kann somit sehr einfach festgelegt werden.

Als Druckmedium kann auch Gas eingesetzt werden, das sich beispielsweise in einer im Kolbenraum 15 untergebrachten Patrone als Behältnis befindet, die zur Auslösung des Spannvorganges mit einem Auslöseelement geöffnet werden kann, so dass das Gas ausströmt und den Kolben 9 in der beschriebenen Weise verschiebt.

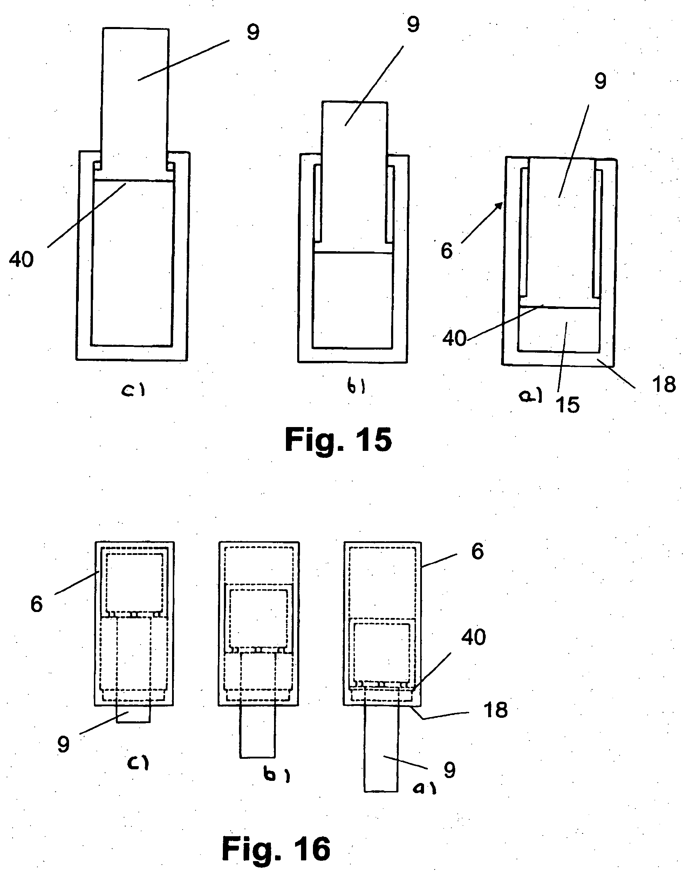

Fig. 15 zeigt einen weiteren Anwendungsfall einer nicht erfindungsgemässe Spanneinrichtung. Sie ist als Druckzylinder ausgebildet und hat den Kolben 9, der im Unterschied zur vorigen Ausführungsform gerade verläuft. Fig. 15a zeigt den Kolben 9 in seiner eingefahrenen Stellung. Seine zu beaufschlagende Kolbenfläche 40 liegt mit Abstand der Stirnwand 18 des Gehäuses 6 gegenüber. In diesem Bereich des Kolbenraumes 15 befinden sich die (nicht dargestellten) Behältnisse 50, 51 mit dem Treibmittel. Soll der Kolben 9 ausgefahren werden, werden entsprechend der vorigen Ausführungsform die Behältnisse mit dem (nicht dargestellten) Auslöseelement geöffnet, so dass die freiwerdenden Komponenten miteinander reagieren können und die Kolbenfläche 40 mit dem notwendigen Druck beaufschlagen. Der Kolben 9 wird entsprechend der vorigen Ausführungsform durch wenigstens eine Sperrklinke gegen Zurückschieben gehalten.

Fig. 16 zeigt eine Spanneinrichtung, die als Zugzylinder ausgebildet ist. Im Unterschied zur vorigen Ausführungsform ist der Kolben 9 in der Ausgangslage aus dem Gehäuse 6 maximal herausgefahren. Zwischen der Stirnwand 18 des Gehäuses 6 und der zu beaufschlagenden Kolbenfläche 40 befindet sich das Druckmedium in den Behältnissen. Soll der Spannvorgang eingeleitet werden, wird das Treibmittel in der beschriebenen Weise freigesetzt, wodurch der Kolben 9 in das Gehäuse 6 geschoben wird.

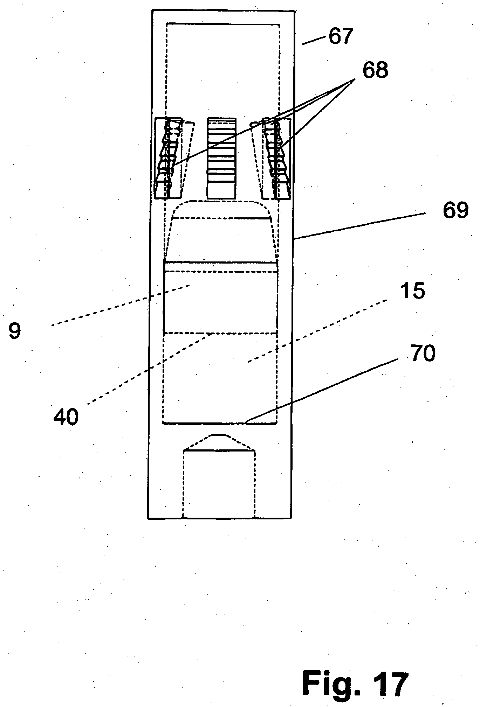

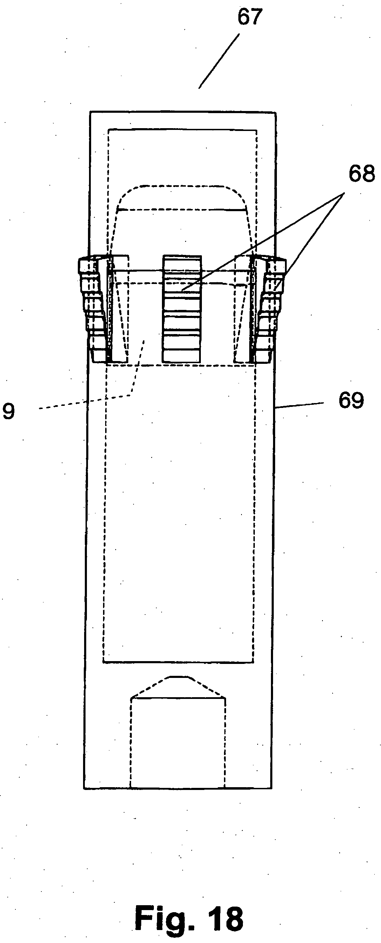

Die nicht erfindungsgemässe Spanneinrichtung gemäß den Fig. 17 und 18 ist in einem schematisch dargestellten Dübel 67 untergebracht, der über seinen Umfang verteilt angeordnete Spreizelemente 68 aufweist. In der Ausgangslage (Fig. 17) sind die Spreizelemente 68 so weit zurückgebogen, dass sie nicht über die Außenwand 69 des Dübels 67 vorstehen. Im Dübel 67 befindet sich der Kolbenraum 15, in welchem der Kolben 9 untergebracht ist. Zwischen dem Kolben 9 und dem Boden 70 des Kolbenraumes 15 ist das Druckmedium untergebracht, das zum Spannvorgang freigesetzt wird und auf die Kolbenfläche 40 wirkt. Der Kolben 9 wird dadurch verschoben und drückt die Spreizelemente 68 so nach außen, dass sie über die Außenwand 69 des Dübels 67 ragen (Fig. 18). Das der Kolbenfläche 40 gegenüberliegende Ende des Kolbens 9 ist verjüngt ausgebildet, so dass die Spreizelemente 68 zuverlässig nach außen gebogen werden. Der Kolben 9 kann wiederum durch wenigstens eine Rastklinke in seiner in Fig. 18 dargestellten Endstellung gesichert werden, so dass die Spreizelemente 68 gegen Zurückfedern gesichert sind.

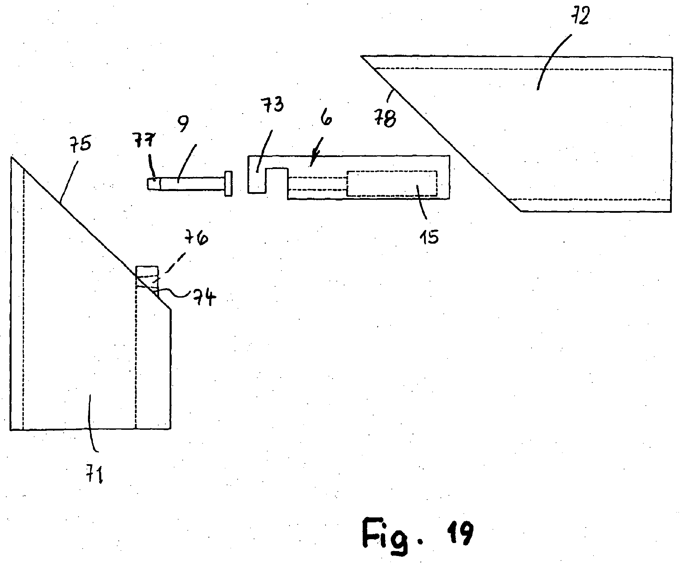

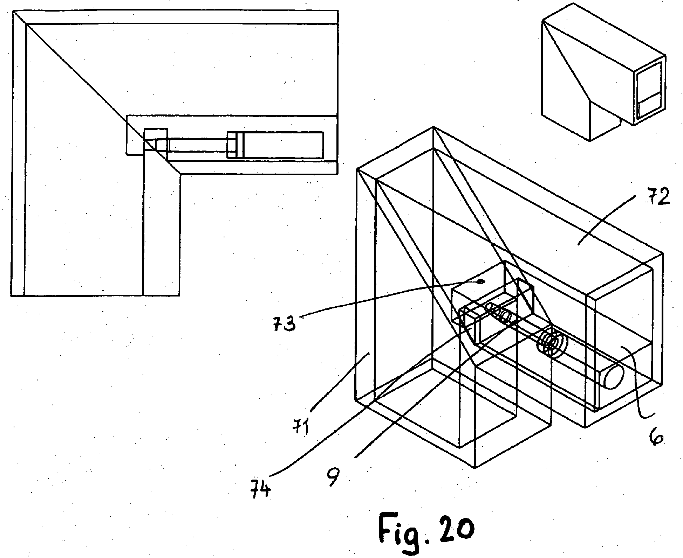

Die Fig. 19 und 20 zeigen, wie mit Hilfe der nicht erfindungsgemässe Spanneinrichtung 2 rechtwinklig zueinander liegende Rahmenteile, die auf Gehrung liegen, miteinander verbunden werden können. Die beiden Rahmenteile 71, 72 sind Hohlprofilteile, die in montierter Lage rechtwinklig zueinander liegen. Die Spanneinrichtung hat den Kolben 9, der im Kolbenraum 15 des Gehäuses 6 untergebracht ist. Das Gehäuse 6 hat einen hakenförmigen Ansatz 73 (Fig. 19), mit dem das Gehäuse 6 ein Halterungsteil 74 übergreift, das an der Innenseite des Rahmenteiles 71 befestigt ist und über die Gehrungsseite 75 des Rahmenteiles 71 vorsteht. Im Halterungsteil 74 befindet sich eine konische Öffnung 76, in die ein konischer Endabschnitt 77 des Kolbens 9 eingreift.

Das Gehäuse 6 ist innerhalb des Rahmenteiles 72 so befestigt, dass der hakenförmige Ansatz 73 des Gehäuses 6 den Halterungsteil 74 übergreift. Wird der Kolben 9 mit dem Druckmedium beaufschlagt, wird er aus dem Gehäuse 6 herausgeschoben und gelangt mit seinem Endabschnitt 77 in die in Ausfahrrichtung sich verjüngende konische Öffnung 76 des Halterungsteiles 74. Über den Ansatz 73 wird hierbei das Rahmenteil 72 mit seiner Gehrungsseite 78 fest gegen die Gehrungsseite 75 des Rahmenteiles 72 gezogen.

Bei einer nicht erfindungsgemässen (nicht dargestellten) Ausführungsform ist im Kolbenraum 15 als Druckmedium wenigstens eine vorgespannte Druckfeder vorgesehen, die den Kolben 9 belastet. Mit wenigstens einem Riegelteil wird der Kolben 9 zunächst in seiner Ausgangslage gehalten. Um die Spannringe 1 zu spannen, wird das Riegelteil mit Hilfe des Auslöseelementes in eine Freigabestellung verschoben, wodurch der Kolben 9 freigegeben wird. Unter der Kraft der vorgespannten Druckfeder wird der Kolben aus der Ausgangslage in die Spannlage verstellt, in der die Spannringe 1 den Schlauch auf dem Anschlussstück festspannen.

Es ist schließlich auch möglich, das Druckmedium auf pyrotechnischem Wege zu erzeugen. In diesem Falle ist im Kolbenraum 15 eine Mini-Sprengladung untergebracht, die mit dem Auslöseelement 52 gezündet wird, wenn die Spannringe 1 den Schlauch auf dem Anschlussstück verspannen sollen. Der bei der Zündung der Mini-Sprengladung entstehende Explosionsdruck verschiebt den Kolben 9 zuverlässig aus der Ausgangslage in die Spannlage.

## Patentansprüche

1. Spanneinrichtung für Schläuche, mit wenigstens einem Spannelement (9), das aus einer Ausgangslage in eine Spannlage verstellbar ist und mit wenigstens einem Anschluss (5) versehen ist, an dem ein Ende (2, 3) eines Spannringes (1) der Spanneinrichtung befestigt ist, der mit seinem anderen Ende (2, 3) mit wenigstens einem Anschluss (4) verbunden ist, der an einem Gehäuse (6) der Spanneinrichtung vorgesehen ist, in das das Spannelement (9) ragt, mit dem der Spannring (1) zusammengezogen wird,
**dadurch gekennzeichnet, dass** das Spannelement (9) ein Kolben ist, der in das Gehäuse (6) ragt, im Gehäuse (6) verschiebbar ist und im Gehäuse (6) einen Druckraum (15) begrenzt, in dem wenigstens ein Druckmedium untergebracht ist, das durch Betätigen wenigstens eines Auslöseelementes (52) der Spanneinrichtung das Spannelement (9) beaufschlagt und es aus der Ausgangstage in die Spannlage verstellt, dass im Druckraum (15) wenigstens ein Behältnis (50, 51) untergebracht ist, das mit dem Auslöseelement (52) zum Freisetzen des Druckmediums geöffnet wird, und dass das Auslöseelement (52) wenigstens ein Öffnungselement (55) aufweist, mit dem das Behältnis (50, 51) geöffnet wird.

2. Spanneinrichtung nach Anspruch 1,
**dadurch gekennzeichnet, dass** das Spannelement (9) nur in Druckbeaufschlagungsrichtung verstellbar ist.

3. Spanneinrichtung nach Anspruch 2,
**dadurch gekennzeichnet, dass** das Sperrelement (9) durch wenigstens ein Sperrelement (26) gegen Verstellen entgegen Druckbeaufschlagungsrichtung gesichert ist.

4. Spanneinrichtung nach Anspruch 3,
**dadurch gekennzeichnet, dass** das Sperrelement (16) eine Sperrklinke ist, die unter Federkraft in eine Verzahnung (36, 37) des Spannelementes (9) eingreift.

5. Spanneinrichtung nach einem der Ansprüche 1 bis 4,
**dadurch gekennzeichnet, dass** das auf dem kolbenseitigen Anschluss (5) und/oder auf dem gehäuseseitigen Anschluss (4) befindliche Ende (2, 3) des Spannringes (1) ein Dehnausgleichsabschnitt ist.

6. Spanneinrichtung nach einem der Ansprüche 1 bis 5,
**dadurch gekennzeichnet, dass** die Enden (2, 3) des Spannringes (1) ringförmig und elastisch aufweitbar ausgebildet sind.

7. Spanneinrichtung nach einem der Ansprüche 1 bis 6,
**dadurch gekennzeichnet, dass** das Öffnungselement (55) wenigstens einen, vorzugsweise mehrere spitz zulaufende Zähne (57) aufweist, mit denen das Behältnis (50, 51) durchstoßen wird.

8. Spanneinrichtung nach einem der Ansprüche 1 bis 7,
**dadurch gekennzeichnet, dass** im Behältnis (50, 51), vorzugsweise in mehreren Behältnissen, flüssige Ausgangsstoffe untergebracht sind, die nach Öffnen des Behältnisses (50, 51) durch chemische Reaktion einen Schaum als Druckmedium bilden.

9. Spanneinrichtung nach einem der Ansprüche 1 bis 8,
**dadurch gekennzeichnet, dass** das Auslöseelement (52) ein außerhalb des Gehäuses (6) liegendes Griffstück (53) hat, das über einen Verbindungsteil (54) mit dem Öffnungselement (55) im Druckraum (15) verbunden ist.

10. Spanneinrichtung nach Anspruch 9,
**dadurch gekennzeichnet, dass** das Gehäuse (6) mit wenigstens einer Schneidkante (61) zum Durchtrennen des Verbindungsteils (54) des Auslöseelementes (52) versehen ist.

## Claims

1. A clamping device for hoses, having at least one clamping element (9), which can be adjusted from an initial position into a clamping position and is provided with at least one connector (5), on which one end (2, 3) of a clamping ring (1) of the clamping device, which clamping ring is connected by way of its other end (2, 3) to at least one connector (4), which is provided on a housing (6) of the clamping device, into which protrudes the clamping element (9), using which the clamping ring (1) is tightened,
**characterised in that** the clamping element (9) is a piston, which protrudes into the housing (6), can be displaced in the housing (6) and delimits a pressure chamber (15) in the housing (6), in which pressure chamber at least one pressure medium is accommodated, which, by means of the actuation of at least one trigger element (52) of the clamping device, loads the clamping element (9) and adjusts it out of the initial position into the clamping position,
**in that** at least one container (50, 51) is accommodated in the pressure chamber (15), which container is opened by way of the trigger element (52) to release the pressure medium, and **in that** the trigger element (52) has at least one opening element (55), using which the container (50, 51) is opened.

2. The clamping device according to Claim 1, **characterised in that** the clamping element (9) can only be adjusted in the pressure-loading direction.

3. The clamping device according to Claim 2, **characterised in that** the clamping element (9) is secured against adjustment counter to the pressure-loading direction by means of at least one locking element (26).

4. The clamping device according to Claim 3, **characterised in that** the locking element (16) is a locking pawl, which engages under spring force into a toothing (36, 37) of the clamping element (9).

5. The clamping device according to one of Claims 1 to 4, **characterised in that** the end (2, 3) of the clamping ring (1) located on the piston-side connector (5) and/or on the housing-side connector (4) is an expansion-compensation section.

6. The clamping device according to one of Claims 1 to 5, **characterised in that** the ends (2, 3) of the clamping ring (1) are constructed in an annular and elastically expandable manner.

7. The clamping device according to one of Claims 1 to 6, **characterised in that** the opening element (55) has at least one, preferably a plurality of pointed teeth (57), by way of which the container (50, 51) is penetrated.

8. The clamping device according to one of Claims 1 to 7, **characterised in that** in the container (50, 51), preferably in a plurality of containers, liquid raw materials are accommodated, which form a foam as pressure medium by means of chemical reaction, after opening of the container (50, 51).

9. The clamping device according to one of Claims 1 to 8, **characterised in that** the trigger element (52) has a handle (53) located outside of the housing (6), which handle is connected via a connecting part (54) to the opening element (55) in the pressure chamber (15).

10. The clamping device according to Claim 9, **characterised in that** the housing (6) is provided with at least one cutting edge (61) for cutting through the connecting part (54) of the trigger element (52).

## Revendications

1. Dispositif de serrage pour flexibles, comportant au moins un élément de serrage (9) qui peut être passé d'une position initiale à une position de serrage et est pourvu d'au moins un raccord (5) auquel est fixée une extrémité (2, 3) d'une bague de serrage (1) du dispositif de serrage, laquelle bague de serrage est reliée par son autre extrémité (2, 3) à au moins un raccord (4) qui est prévu au niveau d'un boîtier (6) du dispositif de serrage et dans lequel dépasse l'élément de serrage (9) par lequel la bague de serrage (1) est resserrée,
**caractérisé en ce que** l'élément de serrage (9) est un piston qui dépasse dans le boîtier (6), est déplaçable dans le boîtier (6) et limite dans le boîtier (6) un espace de compression (15) dans lequel est logé au moins un fluide de pression qui, par actionnement d'au moins un élément de déclenchement (52) du dispositif de serrage, sollicite l'élément de serrage (9) et le passe de la position initiale à la position de serrage (15), qu'est logé dans l'espace de compression (15) au moins un réceptacle (50, 51) qui est ouvert au moyen de l'élément de déclenchement (52) pour libérer le fluide de pression et que l'élément de déclenchement (52) présente au moins un élément d'ouverture (55) qui permet d'ouvrir le réceptacle (50, 51).

2. Dispositif de serrage selon la revendication 1, **caractérisé en ce que** l'élément de serrage (9) n'est réglable que dans le sens de sollicitation par pression.

3. Dispositif de serrage selon la revendication 2, **caractérisé en ce que** l'élément de serrage (9) est bloqué par au moins un élément faisant barrage (26) pour éviter tout déplacement dans le sens inverse du sens de sollicitation par pression.

4. Dispositif de serrage selon la revendication 3, **caractérisé en ce que** l'élément faisant barrage (16) est une lame faisant barrage qui s'engrène sous force de ressort dans une denture (36, 37) de l'élément de serrage (9).

5. Dispositif de serrage selon une des revendications 1 à 4, **caractérisé en ce que** l'extrémité (2, 3) se trouvant sur le raccord situé côté piston (5) et/ou sur le raccord situé côté boîtier (4) de la bague de serrage (1) est une section de compensation d'étirement.

6. Dispositif de serrage selon une des revendications 1 à 5, **caractérisé en ce que** les extrémités (2, 3) de la bague de serrage (1) ont une conformation annulaire et peuvent être élargies élastiquement.

7. Dispositif de serrage selon une des revendications 1 à 6, **caractérisé en ce que** l'élément d'ouverture (55) présente au moins une, de préférences plusieurs dents effilées (57), par lesquelles le réceptacle (50, 51) est percé.

8. Dispositif de serrage selon une des revendications 1 à 7, **caractérisé en ce que**, dans le réceptacle (50, 51), de préférence dans plusieurs réceptacles, sont logées des substances initiales liquides qui, après l'ouverture du réceptacle (50, 51), forment par réaction chimique une mousse faisant office de fluide de pression.

9. Dispositif de serrage selon une des revendications 1 à 8, **caractérisé en ce que** l'élément de déclenchement (52) possède une poignée (53) située en dehors du boîtier (6) et qui est reliée par une pièce de raccordement (54) à l'élément d'ouverture (55) dans l'espace de compression (15).

10. Dispositif de serrage selon la revendication 9, **caractérisé en ce que** le boîtier (6) est pourvu d'au moins une arête de coupe (61) pour sectionner la pièce de raccordement (54) de l'élément de déclenchement (52).
